# EUROPÄISCHE PATENTSCHRIFT

(11) **EP 0 583 706 B1**
(45) Veröffentlichungstag und Bekanntmachung des Hinweises auf die Patenterteilung: **12.11.1997**
(21) Anmeldenummer: 93112634.6
(22) Anmeldetag: 06.08.1993
(51) Int. Cl.: C08L 77/06, C08L 77/00

(54) **Hochschlagzäh-modifiziertes, verstärktes Polyamid 66**
Shock-resistant reinforced Polyamide 66
Polyamide 66 renforcé résistant aux chocs

(30) Priorität: 19.08.1992 DE 4227428
(43) Veröffentlichungstag der Anmeldung: 23.02.1994
(73) Patentinhaber: BAYER AG, 51368 Leverkusen (DE)
(72) Erfinder: Heger, Georg, Dipl.-Chem., D-47800 Krefeld (DE); Oeller, Manfred, Dr., D-47839 Krefeld (DE)

(56) Entgegenhaltungen:
- EP-A- 0 065 278
- EP-A- 0 070 001
- EP-A- 0 279 342
- EP-A- 0 345 486
- DE-A- 3 200 428
- US-A- 4 410 661

## Beschreibung

Die Erfindung betrifft mit Füllstoffen verstärkte Polyamid-Formmassen, die neben Kautschuk-Copolymerisaten mit latent vorhandenen Säuregruppen spezielle Polyamide enthalten, sowie ein Verfahren zu ihrer Herstellung.

Die Polyamide nehmen wegen ihrer guten mechanischen und physikalischen Eigenschaften als wichtige Konstruktionswerkstoffe einen festen Platz in der Technik ein. Eine Besonderheit der Polyamide ist ihre verhältnismäßig hohe Wasseraufnahme.

Wichtige anwendungstechnische Eigenschaften, wie z.B. die Zähigkeit, Reißdehnung, elektrische Durchschlagfestigkeit und der E-Modul, hängen stark von der Wasseraufnahme ab. Durch die Wasseraufnahme werden bestimmte Polyamid-Eigenschaften verbessert, andere hingegen verschlechtert. So wird zwar die Schlagzähigkeit erhöht, zugleich aber die Steifigkeit und elektische Durchschlagfestigkeit im Vergleich zu spritzfrischen Teilen verringert.

Eine weitere Folge der Wasseraufnahme ist eine nicht ausreichende Maßhaltigkeit der Formkörper. Dabei können lediglich die bei kurzfristigem Kontakt mit Wasser auftretenden Maßänderungen durch Trocknen wieder rückgängig gemacht werden, während länger einwirkende Feuchtigkeit zu stetigen irreparablen Dimensionsänderungen der Formkörper führt.

Für viele Anwendungen reichen die geringe Dimensionsstabilität, Festigkeit, Steifigkeit und Wärmeformbeständigkeit unverstärkter Polyamide nicht aus. Die Erhaltung beziehungsweise Verbesserung der Steifigkeit und Dimensionsstabilität von Polyamid-Formteilen ist aber eine wichtige Forderung, wenn sie tragende oder festigkeitsunterstützende Wirkung haben sollen, wie dies zum Beispiel im Kraftfahrzeug-, Geräte-, Apparate- oder Maschinenbau der Fall ist. Durch Ausrüstung mit Verstärkungsstoffen werden diese Nachteile weitgehend überwunden. So werden den Thermoplasten beispielsweise Glasfasern, Glaskugeln oder modifizierte Mineralien in der Schmelze zugesetzt.

Die durch diese Verstärkungsstoffe erzielten Verbesserungen werden jedoch durch Nachteile erkauft. Während Steifigkeit und Festigkeit zumeist stark ansteigen, nimmt die Elastizität, insbesondere die Schlagzähigkeit oft dramatisch ab. Dadurch wird eine breite technische Anwendung vielfach erschwert. Zudem wird es bei steigenden Anteilen an Verstärkungsstoffen schwieriger, Formteile mit störungsfreien Oberflächen zu erhalten.

Nach Lehre der DE 29 44 611 kann die Oberfläche von mineralgefüllten Polyamid 66-Spritzgußteilen durch Zumischen von 5 - 50 Gew.-% eines Copolyamids aus Caprolactam und Hexamethylenadipinat verbessert werden.

In der äquivalenten EP-A 28 391 werden füllstoffhaltige Polyamid-Formmassen aus Polyamid 66 verschiedener Viskositäten und einem Copolyamid aus Caprolactam und Hexamethylendiamin beschrieben.

DE 32 00 428 beansprucht glasfaserverstärkte Mischungen aus Polyamid 66 bzw. Polyamid 6 und amorphen, transparenten Polyamiden aus 2,2,4- und/oder 2,4,4-Trimethylhexamethylendiamin, Isophthalsäure und Hexamethylendiamin, das zum Teil durch Isophorondiamin ersetzt sein kann.

US 4 404 317 lehrt, daß Mischungen aus einem teilkristallinen Polyamid und einem amorphen Polyamid aus Iso-/Terephthalsäure und Hexamethylendiamin sowie gegebenenfalls ε-Caprolactam oder Laurinlactam, die mit Füllstoffen ausgerüstet sind, eine besonders gute Lösungsmittelbeständigkeit aufweisen.

Durch die Herstellung dieser Polyamid-Mischungen werden zwar eine Reihe wichtiger Eigenschaften verbessert, aber nur eine unzureichende Erhöhung der Zähigkeit erreicht.

Zur Erhöhung der Zähigkeit werden daher vielfach elastische Polymere, wie beispielsweise Polyolefine, aber auch Elastomere auf der Basis von Kautschuken, wie Polybutadien/Acrylnitril, oder modifizierte Pfropfpolymerisate zugemischt.

In DE 37 35 404 werden füllstoffhaltige Formmassen aus einem Copolyamid auf Basis Adipinsäure/Hexamethylendiamin, das 1-20 Gew.-Einheiten ε-Caprolactam enthält, Polyamid 66 sowie einem schlagzäh modifizierendem Kautschuk beschrieben.

In DE 38 17 279 werden Formmassen aus einem amorphen Copolyamid aus Iso-/Terephthalsäure und Hexamethylendiamin, einem teilkristallinen Polyamid sowie einem schlagzäh modifizierendem Kautschuk beansprucht, die gegebenfalls auch Füllstoffe enthalten können.

Aus der EP 34 704 sind Mischungen aus Polyamid 66 und Polyamid 6 mit EPDM-Kautschuk als Modifikator, die gegebenenfalls auch Füllstoffe enthalten können, bekannt.

EP 327 978 lehrt, daß man durch Zugabe von 0,5 bis 3 Gew.-% eines Kautschuks mit reaktiven Gruppen eine deutliche Verbesserung der Oberfläche und der Lackierbarkeit von gefülltem Polyamid erreicht werden kann.

In US 4 410 661 werden Mischungen aus Polyamid 66, amorphem Polyamid und Schlagzähmodifikatoren beschrieben, die sich durch eine gute Dimensionsstabilität und Chemikalienbeständigkeit auszeichnen.

Auch durch diese Maßnahmen werden die zähigkeitsbezogenen Eigenschaften nur zum Teil verbessert, die Wärmeformbeständigkeit dagegen verschlechtert, so daß sie für bestimmte Anwendungen, z. B. Radkappen, nicht ausreicht.

Ziel der Erfindung war somit eine Zähigkeitsverbesserung füllstoffhaltiger Polyamide insbesondere bei tiefer Temperatur unter Beibehaltung einer hohen Wärmeformbeständigkeit. Überraschenderweise wurde gefunden, daß die gestellte Aufgabe mit der im folgenden genannten Polyamidmischung gelöst wird:

Gegenstand der Erfindung sind hochschlagzähe Polyamidformmassen, enthaltend
A) von 19 bis 70 Gew.-% Polyhexamethylenadipinsäureamid
B) von 6 bis 16 Gew.-%, bevorzugt von 8 bis 14 Gew.-% eines Copolyamids, aus
   B1) von 80 bis 98 Gew.-%, bevorzugt von 84 bis 95 Gew.-% Einheiten, die sich aus Lactamen ableiten und
   B2) von 20 bis 2, bevorzugt 16 bis 5, Gew.-% Einheiten, die sich von Diaminen ausgewählt aus Ethylendiamin, Tetramethylendiamin, Decamethylendiamin, m-Xylylendiamin, 2,2-Bis(4-amino-cyclohexyl)-propan, 3,3'-Dimethyl-4,4'-diaminodicyclohexylmethan, 3-Aminomethyl-3,5,5-trimethyl-cyclohexylamin, 2,5- und/oder 2,6-Bis-(aminomethyl)-norbornan und/oder 1,4-Diamino-methyl-cyclohexan, und Dicarbonsäuren ausgewählt aus Oxalsäure, Azelainsäure, Decandicarbonsäure, Heptadecandicarbonsäure, 2,2,4- und/oder 2,4,4-Trimethyladipinsäure, Terephthal- oder Isophthalsäure, oder Einheiten, die sich von Azelainsäure und Hexamethylendiamin ableiten,
C) von 4 bis 15 Gew.-%, bevorzugt von 6 bis 10 Gew.-% eines Elastomeren sowie
D) von 50 bis 20 Gew.-%, bevorzugt von 30 bis 20 Gew.-% eines mineralischen Füllstoffs, anorganischen Verstärkungsmaterials oder Fasern aus flüssig-Kristallinen Polymeren
   so daß die Summe aus A) + B) + C) + D) 100 Gew.-% ergibt.

Als Polyamid-Komponente A) der erfindungsgemäßen Formmassen eignet sich das teilkristalline Polyhexamethylenadipinsäureamid, das in H. Hopf, "Die Polyamide", Springer-Verlag, Berlin 1954 ausführlich beschrieben ist (entsprechende Produkte sind im Handel erhältlich, z. B. Durethan® A der BAYER AG oder Ultramid® A der BASF AG).

Als Polyamidkomponente B) kommen Polyamide in Frage, die aus Aminocarbonsäuren wie ω-Aminocapronsäure oder ω-Aminoundecansäure oder ihren Lactamen durch Polykondensation unter Zusatz von Diaminen, ausgewählt aus Ethylendiamin, Tetramethylendiamin, Decamethylendiamin, m-Xylylendiamin, 2,2-Bis-(4-aminocyclohexyl)propan, 3,3'-Dimethyl-4,4'-diamino-dicyclohexylmethan, 3-Aminomethyl-3,5,5-trimethyl-cyclohexylamin, 2,5- und/oder 2,6-Bis-(aminomethyl)-norbornan und/oder 1,4-Diamino-methyclohexan, mit Dicarbonsäuren ausgewählt aus Oxalsäure, Azelainsäure, Decandicarbonsäure, Heptadecandicarbonsäure, 2,2,4- und/oder 2,4,4-Trimethyladipinsäure, Terephthal- oder Isophthalsäure erhalten werden. Selbstverständlich sind auch Copolymere geeignet, die durch Polykondensation mehrerer Monomere entstehen.

Bevorzugt werden Polyamide aus Azelainsäure, Isophthalsäure und/oder Terephthalsäure sowie Aminomethyl-3,5,5-trimethyl-cyclohexylamin, m-Xylylendiamin, 2,5-und/oder 2,6-Bis-(aminomethyl)-norbonan unter Zusatz von Aminocarbonsäuren, wie ω-Aminocapronsäure oder ω-Aminoundecansäure, oder ihren Lactamen.

Bevorzugt werden als Komponente B2) auch Einheiten eingesetzt, die sich von Isophthalsäure und 3-Aminomethyl-3,5,5-trimethyl-cyclohexylamin oder Azelainsäure und Hexamethylendiamin ableiten.

Besonders bevorzugt sind Copolyamide aus Isophthalsäure, 3-Aminomethyl-3,5,5-trimethylcyclohexylamin und ε-Caprolactam.

Die als Komponente C) einzusetzenden Elastomeren sind Polymere, die eine Glasübergangstemperatur von unter 0 °C, vorzugsweise von unter -10 °C und insbesondere von -15 °C bis -140 °C besitzen und in Abmischung mit einem Polyamid eine Verbesserung der Schlagzähigkeit gegenüber dem reinen Polyamid mit sich bringen. Beispiele solcher Elastomere sind die verschiedensten Kautschuke, wie Ethylen-Propylen-Kautschuk, Polyisopren, Polysiloxane, Dien-, Olefin- und Acrylatkautschuke sowie Naturkautschuke, Styrol-Butadien-Blockcopolymere, Ethylen-Copolymerisate mit (Meth)-Acrylsäureestern sowie Polyesteramid-Polyether-Blockcopolymere.

Bevorzugt werden eingesetzt: Copolymerisate mit kautschukelastischen Eigenschaften, die im wesentlichen aus mindestens zwei der folgenden Monomeren erhältlich sind: Butadien, Isopren, 1-Buten, 1-Penten, 1-Hexen, Styrol, Acrylnitril, Ethylen, Propylen und (Meth-)acrylsäureester mit 1 bis 18 C-Atomen in der Alkoholkomponente, also Polymerisate, wie sie z.B. in "Methoden der organischen Chemie", Houben-Weyl, Band 14/1, Georg Thieme Verlag, Stuttgart 1961, Seiten 393 bis 406 und in C.

Bucknall, "Thoughened Plastics", AppL Science Publishers, London, 1977 beschrieben sind. Die bevorzugten Polymerisate besitzen einen Gelgehalt von über 20, vorzugsweise über 40 Gew.-%.

Besonders bevorzugt werden Kautschuke mit reaktiven Komponenten, die eine Haftung mit den Amin- oder Carboxylendgruppen des Polyamids ermöglichen. Hier seien olefinisch ungesättigte Carbonsäuren, wie Acrylsäure, Methacrylsäure und deren Derivate, insbesondere tert.-Butylester und/oder solche mit Epoxygruppen, sowie α,β-ungesättigte Dicarbonsäuren, wie Maleinsäure, Fumarsäure, Itakonsäure, Akonitsäure, Zitrakonsäure bzw. deren Anhydride genannt.

Bei den bevorzugten Arten von Elastomeren C) im Sinne der Erfindung handelt es sich um selektiv hydrierte Blockcopolymerisate eines vinylaromatischen Monomeren (X) und eines konjugierten Diens (Y) vom X-Y- bzw. X-Y-X-Typ. Im allgemeinen kann für die Herstellung der geeigneten Blockcopolymerisate aus z.B. Styrol, α-Methylstyrol und/oder Vinyltoluol und aus konjugierten Dienen, wie Butadien und/oder Isopren, die für die Herstellung von Styrol-Dien-Blockcopolymerisaten verwendete Technik benutzt werden, die in "Encyclopedia of Polymer Science and Technology", Bd. 15, Interscience, N.Y. (1971) auf den Seiten 508 ff beschrieben ist Die selektive Hydrierung kann auf an sich bekannten Wegen durchgeführt werden und bedeutet, daß die ethylenischen Doppelbindungen im wesentlichen vollständig hydriert werden, wobei die aromatischen Doppelbindungen im wesentlichen unbeeinflußt bleiben. Derartige selektiv hydrierte Blockcopolymerisate werden z.B. in der DE-OS 30 00 282 und EP-A 215 501 beschrieben.

Als eine weitere Gruppe bevorzugter Modifikatoren sind die sogenannten Ethen-Propen-(EPM)- bzw. Ethen-Propen-Dien-(EPDM)-Kautschuke zu nennen, die vorzugsweise ein Verhältnis von Ethenresten zu Propenresten im Bereich von 40:60 bis 90:10 aufweisen. Besonders bevorzugt sind die sogenannten EPM- bzw. EPDM-Kautschuke, in denen das Gewichtsverhältnis von Ethen- zu Propenresten im Bereich von 40:60 bis 65:35 liegt. Sie können amorph oder semikristallin sein.

Die Mooney-Viskositäten (ML1+4/100°C) der unvernetzten EPM- bzw. der EPDM-Kautschuke liegen zwischen 25 bis 100, vorzugsweise zwischen 35 bis 90 (nach DIN 53 523). Die Gelgehalte der unvernetzten EPM- bzw. EPDM-Kautschuke liegen unter 1 Gew.-%. EPM-Kautschuke haben praktisch keine Doppelbindungen mehr, während die Ethen/Propen/Dien-Terpolymerisate (EPDM) 1 bis 20 Doppelbindungen/100 C-Atome aufweisen können.

Als Dien-Monomere für EPDM-Kautschuke seien beispielsweise konjungierte Diene z.B. Isopren und Butadien, und nicht-konjugierte Diene mit 5 bis 25 C-Atomen, z.B. 1,4-Pentadien, 1,4-Hexadien, 1,5-Hexadien, 2,5-Dimethyl-1,5-hexadien und 1,4- und 1,7-Octadien; cyclische Diene, z.B. Cyclopentadien, Cyclohexadien, Cyclooctadien und Dicyclopentadien; Alkenylnorbornene, z.B. 5-Ethyliden-2-norbornen, 5-Butyliden-2-norbornen, 2-Meth-allyl-5-norbornen, 2-Isopropenyl-5-norbornen und Tricyclodiene, z.B. 3-Methyl-tricyclo-(5,2,1,0,2,6)-3,8-decadien. Bevorzugt seien die nicht konjugierten Diene 1,5-Hexadien, Ethyliden-norbornen und Dicyclopentadien angeführt. Der Diengehalt im EPDM beträgt vorzugsweise 0,5 bis 10 Gew.-%. Derartige EPM- bzw. EPDM-Kautschuke sind z.B. in der DE-OS 28 08 709 beschrieben.

Die hydrierten X-Y-Blockcopolymerisate sowie die EPM- bzw. EPDM-Kautschuke werden vorzugsweise mit Epoxy-Gruppen oder reaktiven Carbonsäuren bzw. deren Derivaten in Mengen von 0,7 bis 4 Gew.-% gepfropft. Hier seien Acrylsäure, Methacrylsäure und deren Derivate, insbesondere Ester und/oder solche mit Epoxygruppen, sowie α,β-ungesättigte Dicarbonsäuren, wie Maleinsäure, Fumarsäure, Itakonsäure, Akonitsäure, Vinylbenzoesäure, Vinylphthalsäure, Zitrakonsäure bzw. deren Anhydride als Beispiele genannt. Die Carboxylgruppen können teilweise mit basischen Metallsalzen neutralisiert sein, wobei es sich um ein monovalentes, divalentes oder trivalentes Metallion handeln kann, z.B. Na, Zn, Al, K.

Als Verstärkungsmittel D) werden mineralische Füllstoffe, wie Asbest, Kieselsäure, Talkum, Calciumsilikat (Wollastonit), Aluminiumsilikat, Magnesiumcarbonat, Microvit, Kreide, calcinierte Kaoline, Glimmer (Muskovit), Feldspat und Quarzmehl oder Kombinationen dieser Füllstoffe verwendet. Diese können mit den üblichen Schlichten und Haftvermittlern auf Organosilanbasis, wie z. B. Trimethoxyaminpropylsilan beschichtet sein.

Bevorzugt sind calciniertes Kaolin und Wollastonit mit Silanschlichten.

Die erfindungsgemäßen Formmassen können anstelle der mineralischen Füllstoffe auch Glaskugeln, Glasmehl, anorganische Verstärkungsmaterialien oder Fasern aus flüssig-kristallinen Polymeren enthalten. Dies sind beispielsweise Keramikfüllstoffe, wie Aluminium- und Bornitrit, oder Kombinationen der Füllstoffe mit Verstärkungsstoffen wie Glasfasern, Kohlenstoffasern oder Aramidfasern.

Darüber hinaus können die erfindungsgemäßen Formmassen auch die üblichen Zusätze, wie Farbstoffe, Pigmente, Stabilisatoren, Flammschutzadditive, Nukleierungs-, Schmier- und Entformungsmittel enthalten.

Für die Herstellung der erfindungsgemäßen Formmassen sind die bei verstärkten Thermoplasten üblichen Verfahren anwendbar. Die Einarbeitung des Füllstoffs in die Polyamid-Formmasse kann auf Knetern, Walzen oder Ein- oder Mehrwellenextrudern bei Temperaturen oberhalb 270°C erfolgen, indem man die Komponenten A), B) und C) vorlegt und die Komponente D) in die Schmelze dosiert bzw. die Komponenten B) C) und D) der vorgelegten Komponente A) zumischt. Es ist jedoch auch möglich die Komponenten A) und B) bzw. A) und C) vor der Verarbeitung zu vermischen und die beiden übrigen C) und D) bzw. B) und D) zuzugeben. Die Menge der Additive ist dabei so zu bemessen, daß die Additive die gewünschte Wirkung in der Mischung entfalten können. Sie ist leicht durch Vorversuche zu ermitteln.

### Beispiele

Die folgenden Komponenten wurden für die Ausführung der Beispiele 1 bis 12 verwendet:
A) Polyamid 66 mit der relativen Viskosität 3,0 (gemessen an einer 1 Gew.-%-igen Lösung in m-Kresol bei 25°C).
B1) Polyamid 6 mit der relativen Viskosität 3,0 (gemessen an einer 1 Gew.-%-igen Lösung in m-Kresol bei 25°C).
B2) Copolyamid aus 95 Gew.-% ε-Caprolactam, 5 Gew.-% Adipinsäure/Hexamethylendiamin mit einer relativen Viskosität von 2,9 (gemessen an einer 1 Gew.-%-igen Lösung in m-Kresol bei 25°C).
B3) Polyamid aus 5 Gew.-% Isophthalsäure, 5 Gew.-% 3-Aminomethyl-3,5,5-trimethyl-cyclohexylamin und 90 Gew.-% ε-Caprolactam mit einer relativen Viskosität von 3,1 (gemessen an einer 1 Gew.-%-igen Lösung in m-Kresol bei 25°C).
B4) Polyamid aus 5 Gew.-% Isophthalsäure, 5 Gew.-% 3-Aminomethyl-3,5,5-trimethyl-cyclohexylamin und 90 Gew.-% ε-Caprolactam mit einer relativen Viskosität von 3,6 (gemessen an einer 1 Gew.-%-igen Lösung in m-Kresol bei 25°C).
B5) Amorphes Polyamid aus Hexamethylendiamin und Isophthalsäure mit einer relativen Viskosität von 2,5 (gemessen an einer 1 Gew.-%-igen Lösung in m-Kresol bei 25°C).
B6) Polyamid aus 8 Gew.-% Azelainsäure, 8 Gew.-% Hexamethylendiamin und 84 Gew.-% ε-Caprolactam mit einer relativen Viskosität von 3,5 (gemessen an einer 1 gew.-%igen Lösung in m-Kresol bei 25°C).
C1) Emulsionspolymerisat aus 80 Gew.-Teilen vernetztem Polybutadien (Gelgehalt über 70%, gemessen in Toluol) und 20 Gew.-Teilen Pfropfauflage aus
18 Gew.-Teilen Methylmethacrylat und
2 Gew.-Teilen n-Butylacrylat,

wobei der mittlere Teilchendurchmesser der in Latexform vorliegenden Pfropfgrundlage zwischen 0,3 und 0,4 µm lag (vgl. Angaben in DE3 105 364 und DE-3 019 233).
C2) EPM-Kautschuk aus Ethylen (45 Gew.-%)/Propylen, gepfropft mit ca. 0,7 Gew.-% Maleinsäureanhydrid, Dichte 0,86 g/cm³, MFI (2,16 kg/230°C) = 3; Exxelor VA 1803 (Handelsprodukt der Firma EXXON), Herstellung siehe WO 91/07467, Beispiele 1-6
C3) Styrol-Ethylen/Butylen-Styrol-Triblockpolymerisat mit einem Styrol/Kautschuk-Verhältnis von 28:72, funktionalisiert mit 2 Gew.-% Bernsteinsäureanhydrid, einer Glastemperatur von -42°C und einer Shore-Härte von 75 Kraton FG 1901X, (Handelsprodukt der Fa. SHELL).
D) Calciniertes, silanisiertes Kaolin
E) Wollastonit

**Tabelle 1:**

| Zusammensetzung der Formmassen | | | | | | | | | | | | |
|---|---|---|---|---|---|---|---|---|---|---|---|---|
| Bsp.Nr. | Anteil der Komponente [Gew.-%] | | | | | | | | | | | |
| | A1 | B1 | B2 | B3 | B4 | B5 | B6 | C1 | C2 | C3 | D | E |
| 1* | 63 | - | - | 7 | - | - | - | - | - | - | 30 | - |
| 2* | 49 | 14 | - | - | - | - | - | 7 | - | - | 30 | - |
| 3* | 49 | - | - | - | 14 | - | - | 7 | - | - | 30 | - |
| 4* | 49 | - | 14 | - | - | - | - | - | 7 | - | 30 | - |
| 5* | 49 | 14 | - | - | - | - | - | - | 7 | - | 30 | - |
| 6 | 49 | - | - | - | 14 | - | - | - | 7 | - | 30 | - |
| 7* | 49 | 6 | 8 | - | - | - | - | - | 7 | - | 30 | - |
| 8 | 49 | 6 | - | 8 | - | - | - | - | 7 | - | 30 | - |
| 9 | 49 | - | - | - | 14 | - | - | - | | 7 | 30 | - |
| 10* | 49 | - | - | - | - | 14 | - | - | 7 | - | 30 | - |
| 11* | 49 | - | - | - | - | 14 | - | - | - | 7 | 30 | - |
| 12 | 49 | - | - | - | 14 | - | - | - | 7 | - | - | 30 |
| 13 | 49 | - | - | - | 10 | - | - | - | 11 | - | 30 | - |
| 14 | 54 | - | - | - | 11 | - | - | - | 10 | - | 25 | - |
| 15 | 49 | - | - | - | - | - | 14 | - | 7 | - | 30 | - |

| | | | | | | | | | | | | |
|---|---|---|---|---|---|---|---|---|---|---|---|---|
| * Vergleichseinstellungen | | | | | | | | | | | | |

### Herstellung und Prüfung der Formmassen

Auf einem kontinuierlich arbeitenden Doppelwellenextruder wurden das Polyamid A), das Polyamid B) sowie der Modifikator C) aufgeschmolzen und in der Schmelze homogenisiert. Über einen zweiten Dosiertrichter wurde der Füllstoff D) in die Schmelze dosiert. Die Zylindertemperaturen wurden so gewählt, daß Massetemperaturen von 260 bis 310°C eingehalten wurden. Der Schmelzestrang wurde in Wasser abgeleitet, granuliert und getrocknet.

Von den Formmassen wurden auf einer üblichen Spritzgußmaschine 80 mm x 10 mm x 4 mm-Prüfstäbe, Zugstäbe und 3 mm-Rundplatten mit einem Durchmesser von 60 mm hergestellt. Geprüft wurden der Zug-E-Modul (DIN 53 457), die Wärmeformbeständigkeit (HDT-A an flach aufgelegten Prüfkörpern bei einer Randfaserdehnung von 0,2 %, ISO 75) sowie die Schlagzähigkeit bei Raumtemperatur und -30°C bzw. Kerbschlagzähigkeit nach Izod (ISO 180). Außerdem wurde an den Rundplatten im biaxialen Durchstoßversuch die Arbeitsaufnahme nach DIN 53 443 bei Raumtemperatur und -30°C ermittelt. Die Oberflächengüte wurde visuell an den Rundplatten bewertet.

In Tab. 1 ist die Zusammensetzung der Formmassen dargestellt, die in den Beispielen 1 bis 14 verwendet wurden.

Tab. 2 gibt die Prüfergebnisse der Formkörper entsprechend den Beispielen 1 bis 14 wieder.

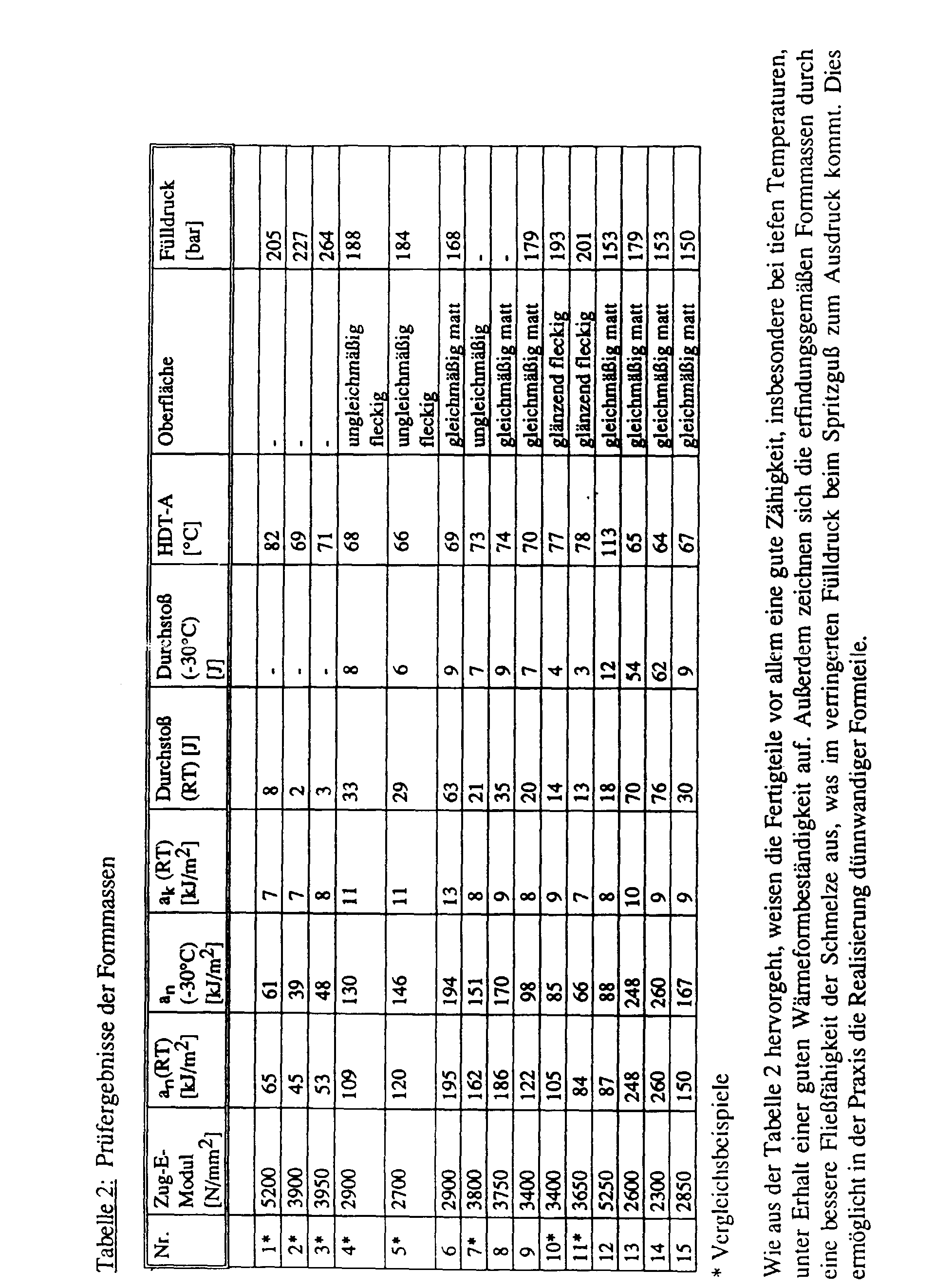

## Patentansprüche

1. Hochschlagzähe Polyamidformmassen, enthaltend
A) von 19 bis 70 Gew.-% Polyhexamethylenadipinsäureamid
B) von 6 bis 16 Gew.-% eines Copolyamids aus
B1) von 80 bis 98 Gew.-% Einheiten, die sich aus Lactamen ableiten und
B2) von 20 bis 2 Gew.-% Einheiten, die sich von Diaminen ausgewählt aus Ethylendiamin, Tetramethylendiamin, Decamethylendiamin, m-Xylylendiamin, 2,2-Bis-(4-amino-cyclohexyl)-propan, 3,3'-Dimethyl-4,4'-diaminodicyclohexylmethan, 3-Aminomethyl-3,5,5-trimethyl-cyclohexylamin, 2,5- und/oder 2,6-Bis-(aminomethyl)-norbornan und/oder 1,4-Diamino-methyl-cyclohexan, und Dicarbonsäuren ausgewählt aus Oxalsäure, Azelainsäure, Decandicarbonsäure, Heptadecandicarbonsäure, 2,2,4- und/oder 2,4,4-Trimethyladipinsäure, Terephthal- oder Isophthalsäure, oder Einheiten die sich von Azelainsäure und Hexamethylendiamin ableiten,
C) von 4 bis 15 Gew.-% eines Elastomeren und
D) von 50 bis 20 Gew.-% eines mineralischen Füllstoffs, anorganischen Verstärkungsmaterials oder Fasern aus flüssig-Kristallinen Polymeren so daß die Summe aus A) + B) + C) + D) 100 Gew.-% ergibt.

2. Polyamidformmassen gemäß Anspruch 1, dadurch gekennzeichnet, daß sie von 46 bis 66 Gew.-% Polyhexamethylenadipinsäureamid A), von 8 bis 14 Gew.-% eines Copolyamids B), von 6 bis 10 Gew.-% eines Elastomeren C) sowie von 30 bis 20 Gew.-% eines mineralischen Füllstoffs D) enthalten, so daß die Summe aus A) + B) + C) + D) 100 Gew.-% ergibt.

3. Polyamidformmassen gemäß den Ansprüchen 1 bis 2, dadurch gekennzeichnet, daß sie Copolyamide B) enthalten, die sich zusammensetzen aus
von 84 bis 95 Gew.-% Einheiten B1) und
von 5 bis 16 Gew.-% Einheiten B2).

4. Polyamidformmassen gemäß den Ansprüchen 1 bis 3, dadurch gekennzeichnet, daß sie als Polyamidkomponente A) teilkristallines Polyhexamethylenadipinsäureamid enthalten.

5. Polyamidformmassen gemäß den Ansprüchen 1 bis 4, dadurch gekennzeichnet, daß sie als Polyamidkomponente B) Polyamide und Copolyamide erhältlich aus Aminocarbonsäuren wie ω-Aminocapronsäure oder ω-Aminoundecansäure oder ihren Lactamen durch Polykondensation unter Zusatz von Isophthalsäure und β-Aminomethyl-3,5,5-trimethyl-cyclohexylamin oder Azelainsäure und Hexamethylendiamin enthalten.

6. Polyamidformmassen gemäß den Ansprüchen 1 bis 4, dadurch gekennzeichnet, daß sie als Polyamidkomponente B) Polyamide erhältlich aus Azelainsäure, Isophthalsäure und/oder Terephthalsäure sowie Aminomethyl-3,5,5-trimethylcyclohexylamin, m-Xylylendiamin, 2,5- und/oder 2,6-Bis-(aminomethyl)-norbonan unter Zusatz von Aminocarbonsäuren wie ω-Aminocapronsäure, oder ω-Aminoundecansäure oder ihren Lactamen, enthalten.

7. Polyamidformmassen gemäß den Ansprüchen 1 bis 6, dadurch gekennzeichnet, daß sie als Polyamidkomponente B) Copolyamide aus Isophthalsäure, 3-Aminomethyl-3,5,5-trimethyl-cyclohexylamin und ε-Caprolactam enthalten.

8. Polyamidformmassen gemäß den Ansprüchen 1 bis 7, dadurch gekennzeichnet, daß sie als Elastomer C) Copolymerisate mit kautschukelastischen Eigenschaften enthalten, die im wesentlichen aus mindestens zwei er Monomeren: Butadien, Isopren, 1-Buten, 1-Penten, 1-Hexen, Styrol, Acrylnitril, Ethylen, Propylen und (Meth-)acrylsäureester mit 1 bis 18 C-Atomen in der Alkoholkomponente, erhältlich sind und einen Gelgehalt von über 20 Gew.% aufweisen.

9. Polyamidformmassen gemäß den Ansprüchen 1 bis 8, dadurch gekennzeichnet, daß sie als Elastomer C) Kautschuke mit reaktiven Komponenten enthalten, die eine Haftung mit den Amin- oder Carboxylendgruppen des Polyamids ermöglichen, hergestellt unter Verwendung olefinisch ungesättigter Carbonsäuren, wie Acrylsäure, Methacrylsäure und deren Derivate, insbesondere tert.-Butylester und/oder solchen mit Epoxygruppen, sowie α,β-ungesättigte Dicarbonsäuren, wie Maleinsäure, Fumarsäure, Itakonsäure, Akonitsäure, Zitrakonsäure bzw. deren Anhydride.

10. Polyamidformmassen gemäß den Ansprüchen 1 bis 9, dadurch gekennzeichnet, daß sie als Verstärkungsmittel D) mineralische Füllstoffe, wie Asbest, Kieselsäure, Talkum, Calciumsilikat (Wollastonit), Aluminiumsilikat, Magnesiumcarbonat, Microvit, Kreide, calcinierte Kaoline, Glimmer (Muskovit), Feldspat und Quarzmehl oder Kombinationen dieser Füllstoffe enthalten.

11. Polyamidformmassen gemäß Anspruch 10, dadurch gekennzeichnet, daß sie als Verstärkungsmittel D) calciniertes Kaolin und Wollastonit mit Silanschichten enthalten.

12. Verwendung der Polyamidformmassen gemäß den Ansprüchen 1 bis 11 zur Herstellung geformter Körper.

13. Formkörper aus Polyamidformmassen gemäß den Ansprüchen 1 bis 11.

## Claims

1. High-impact polyamide moulding compositions comprising
A) 19 to 70 wt.% polyhexamethylene adipic acid amide,
B) 6 to 16 wt.% of a copolyamide consisting of
B1) 80 to 98 wt.% of units which are derived from lactams and
B2) 20 to 2 wt.% of units which are derived from diamines selected from among ethylenediamine, tetramethylenediamine, decamethylenediamine, m-xylylenediamine, 2,2-bis(4-aminocyclohexyl) propane, 3,3'-dimethyl-4,4'-diaminodicyclohexyl methane, 3-aminomethyl-3,5,5-trimethylcyclohexylamine, 2,5- and/or 2,6-bis(aminomethyl) norbornane and/or 1,4-diaminomethylcyclohexane, and dicarboxylic acids selected from among oxalic acid, azelaic acid, decane dicarboxylic acid, heptadecane dicarboxylic acid, 2,2,4- and/or 2,4,4-trimethyladipic acid, terephthalic acid or isophthalic acid, or units which derive from azelaic acid and hexamethylenediamine,
C) 4 to 15 wt.% of an elastomer and
D) 50 to 20 wt.% of a mineral filler, an inorganic reinforcement or liquid crystalline polymer fibres,
such that the sum of A) + B) + C) + D) is equal to 100 wt.%.

2. Polyamide moulding compositions according to Claim 1, characterised in that they consist of 46 to 66 wt.% polyhexamethylene adipic acid amide A), from 8 to 14 wt.% of a copolyamide B), from 6 to 10 wt.% of an elastomer C) and also from 30 to 20 wt-% of a mineral filler D), such that the sum of A) + B) + C) + D) is equal to 100 wt.%.

3. Polyamide moulding compositions according to Claims 1 and 2, characterised in that they comprise copolyamides B) consisting of
84 to 95 wt.% of units B1) and
5 to 16 wt.% of units B2).

4. Polyamide moulding compositions according to Claims 1 to 3, characterised in that they comprise as the polyamide component A) partly crystalline polyhexamethylene adipic acid amide.

5. Polyamide moulding compositions according to Claims 1 to 4, characterised in that they comprise as the polyamide component B) polyamides and copolyamides obtainable from aminocarboxylic acids such as ω-aminocaproic acid or ω-aminoundecanoic acid or lactams thereof, by polycondensation, with the addition of isophthalic acid and 3-aminomethyl-3,5,5-trimethylcyclohexylamine or azelaic acid and hexamethylenediamine.

6. Polyamide moulding compositions according to Claims 1 to 4, characterised in that they comprise as the polyamide component B) polyamides obtainable from azelaic acid, isophthalic acid and/or terephthalic acid and also aminomethyl-3,5,5-trimethylcyclohexylamine, m-xylylenediamine, 2,5-and/or 2,6-bis(aminomethyl) norbornane, with the addition of aminocarboxylic acids such as ω-aminocaproic acid or ω-aminoundecanoic acid or lactams thereof.

7. Polyamide moulding compositions according to Claims 1 to 6, characterised in that they comprise as the polyamide component B) copolyamides comprising isophthalic acid, 3-aminomethyl-3,5,5-trimethylcyclohexylamine and ε-caprolactam.

8. Polyamide moulding compositions according to Claims 1 to 7, characterised in that they comprise as the elastomer C) copolymers having rubber-elastic properties, which are substantially obtainable from at least two of the monomers butadiene, isoprene, 1-butene, 1-pentene, 1-hexene, styrene, acrylonitrile, ethylene, propylene and (meth)acrylic acid esters having 1 to 18 carbon atoms in the alcohol component, and have a gel content of more than 20 wt.%.

9. Polyamide moulding compositions according to Claims 1 to 8, characterised in that they comprise as the elastomer C) rubbers which have reactive components which afford adhesion to the terminal amine or carboxyl groups of the polyamide, and are prepared using olefinically unsaturated carboxylic acids such as acrylic acid, methacrylic acid and derivatives thereof, in particular tert.butyl esters and/or those such as have epoxy groups, and also α,β-unsaturated dicarboxylic acids such as maleic acid, fumaric acid, itaconic acid, aconitic acid, citraconic acid or anhydrides thereof.

10. Polyamide moulding compositions according to Claims 1 to 9, characterised in that they comprise as the reinforcing agent D) mineral fillers such as asbestos, silica, talcum, calcium silicate (wollastonite), aluminium silicate, magnesium carbonate, Microvit, chalk, calcined kaolins, mica (muscovite), feldspar and silica flour or combinations of these fillers.

11. Polyamide moulding compositions according to Claim 10, characterised in that they comprise as the reinforcing agent D) calcined kaolin and wollastonite with silane layers.

12. Use of the polyamide moulding compositions according to Claims 1 to 11 for producing moulded bodies.

13. Mouldings formed from polyamide moulding compositions according to Claims 1 to 11.

## Revendications

1. Matières à mouler à base de polyamides, à haute résilience, contenant :
A) de 19 à 70 % en poids de polyhexaméthylèneadipamide;
B) de 6 à 16 % en poids d'un copolyamide consistant lui même en :
B1) de 80 à 98 % en poids de motifs dérivant de lactames, et
B2) de 20 à 2 % en poids de motifs dérivant de diamines choisies parmi l'éthylènediamine, la tétraméthylènediamine, la décaméthylènediamine, la m-xylylènediamine, le 2,2-bis-(4-aminocyclohexyl)propane, le 3,3'-diméthyl-4,4'-diaminodicyclohexylméthane, la 3-aminométhyl-3,5,5-triméthylcyclohexylamine, le 2,5- et/ou le 2,6-bis-(aminométhyl)-norbornane et/ou le 1,4-diaminométhylcyclohexane, et d'acides dicarboxyliques choisis parmi l'acide oxalique, l'acide azélaique, l'acide décanedioïque, l'acide heptadécanedioïque, l'acide 2,2,4- et/ou 2,4,4-triméthyladipique, l'acide téréphtalique ou l'acide isophtalique, ou de motifs dérivant de l'acide azélaïque et de l'hexaméthylènediamine,
C) de 4 à 15 % en poids d'un élastomère ; et
D) de 50 à 20 % en poids d'une matière de charge minérale, d'une matière renforçante minérale ou de fibres de polymères à cristaux liquides,
la somme des pourcentages de A) + B) + C) + D) représentant 100 % en poids.

2. Matières à mouler à base de polyamides selon la revendication 1, caractérisées en ce qu'elles contiennent de 46 à 66% en poids du polyhexaméthylèneadipamide A), de 8 à 14 % en poids de copolyamides B), de 6 à 10 % en poids d'élastomère C), et de 30 à 20 % en poids d'une matière de charge minérale D), la somme des proportions de A) + B) + C) + D) représentant 100 % en poids.

3. Matières à mouler à base de polyamides selon les revendications 1 et 2, caractérisées en ce qu'elles contiennent des copolyamides B) constitués de
- 84 à 95 % en poids des motifs B1, et
- 5 à 16 % en poids des motifs B2.

4. Matières à mouler à base de polyamides selon les revendications 1 à 3, caractérisées en ce qu'elles contiennent en tant que composant polyamide A) du polyexhaméthylèneadipamide partiellement cristallin.

5. Matières à mouler à base de polyamides selon les revendications 1 à 4, caractérisées en ce qu'elles contiennent en tant que composant polyamide B) des polyamides et des copolyamides obtenus à partir d'acides aminocarboxyliques tels que l'acide ω-aminocaproïque ou l'acide ω-aminoundécanoïque ou leurs lactames, par polycondensation avec adjonction d'acide isophtalique et de 3-aminométhyl-3,5,5-triméthyl-cyclohexylamine ou d'acide azélaïque et d'hexaméthylènediamine.

6. Matières à mouler à base de polyamides selon les revendications 1 à 4, caractérisées en ce qu'elles contiennent en tant que composant polyamide B) des polyamides obtenus à partir de l'acide azélaïque, de l'acide isophtalique et/ou de l'acide téréphtalique, d'une part, de l'aminométhyl-3,5,5-triméthylcyclohexylamine, de la m-xylylènediamine, du 2,5- et/ou 2,6-bis-(aminométhyl)norbornane d'autre part, avec adjonction d'acides aminocarboxyliques tels que l'acide ω-aminocaproïque ou l'acide ω-aminoundécanoïque, ou leurs lactames.

7. Matières à mouler à base de polyamides selon les revendications 1 à 6, caractérisées en ce qu'elles contiennent en tant que composant polyamide B) des copolyamides de l'acide isophtalique, de la 3-aminométhyl-3,5,5-triméthylcyclohexylamine et de l'E-caprolactame.

8. Matières à mouler à base de polyamides selon les revendications 1 à 7, caractérisées en ce qu'elles contiennent en tant qu'élastomère C) des copolymères à propriétés d'élasticité analogues à celles des caoutchoucs, obtenus essentiellement à partir d'au moins deux des monomères suivants: butadiène, isoprène, 1-butène, 1-pentène, 1-hexène, styrène, acrylonitrile, éthylène, propylène et esters (méth)acryliques contenant 1 à 18 atomes de carbone dans le composant alcool, et qui ont une teneur en gel supérieure à 20 % en poids.

9. Matières à mouler à base de polyamides selon les revendications 1 à 8, caractérisées en ce qu'elles contiennent en tant qu'élastomère C) des caoutchoucs à composants réactifs permettant une adhérence avec les groupes terminaux amines ou carboxyles du polyamide, préparés avec utilisation d'acides carboxyliques à insaturation oléfinique comme l'acide acrylique, l'acide méthacrylique ou leurs dérivés, en particulier les esters tert-butyliques et/ou des esters à groupes époxy, et d'acides dicarboxyliques α,β-insaturés comme l'acide maléique, l'acide fumarique, l'acide itaconique, l'acide aconitique, l'acide citraconique ou leurs anhydrides.

10. Matières à mouler à base de polyamides selon les revendications 1 à 9, caractérisées en ce qu'elles contiennent en tant qu'agents renforçants D) des matières de charge minérales telles que l'amiante, la silice, le talc, le silicate de calcium,(wollastonite), un silicate d'aluminium, un carbonate de magnésium, du Microvit, de la craie, un kaolin calciné, du mica (muscovite), du feldspath ou de la farine de quartz ou une combinaison de ces matières de charge.

11. Matières à mouler à base de polyamides selon la revendication 10, caractérisées en ce qu'elles contiennent en tant qu'agents renforçants D) du kaolin calciné et de la wollastonite portant des couches de silanes.

12. Utilisation des matières à mouler à base de polyamides selon les revendications 1 à 11 pour la fabrication d'objets moulés.

13. Objets moulés à partir des matières à mouler à base de polyamides des revendications 1 à 11.
